# EUROPEAN PATENT APPLICATION

(11) **EP 2 639 351 A1**
(43) Date of publication of application: **18.09.2013**
(21) Application number: 12159306.5
(22) Date of filing: 13.03.2012
(51) Int. Cl.: D21H 11/18, D21H 21/10, D21H 21/18, C08L 1/02

(54) **Retention of cellulose fibres**

(71) Applicant: Södra Skogsägarna ekonomisk förening, 351 89 Växjö (SE)
(72) Inventor: Hasani, Merima, 413 16 GÖTEBORG (SE); Mesic, Narcis, 432 50 VARBERG (SE); Söderqvist Lindblad, Margaretha, 432 38 VARBERG (SE); Wallin, Mats, 430 31 ÅSA (SE)
(74) Representative: Lind, Urban Arvid Oskar

(57) **Abstract**

The present invention relates to a cellulose-based product comprising a pulp stock comprising cellulose fibres; one or more retention agents; and cellulose nanocrystals (CNC). The present invention also relates to a method for preparation of a cellulose-based product comprising the steps of: supplying a pulp stock comprising cellulose fibres; adding one or more retention agents to said pulp stock; adding cellulose nanocrystals (CNC) to said pulp stock; and mixing. Further, the present invention relates to a product comprising said cellulose-based product, wherein the product is a paper, a paper sheet, a board and a composite product.

## Description

### Technical field of the invention

The present invention relates to a cellulose based product comprising cellulose nanocrystals (CNC). The invention also relates to a method for producing a cellulose based product comprising cellulose nanocrystals (CNC); and to a paper product comprising the cellulose based product.

### Background of the invention

Depending on the application of paper products, there are different requirements of the properties of the cellulose components making up the final paper product. The properties may vary with the origin of the cellulose components, but may also be changed by modification by a broad range of methods, such as by chemical modification of the cellulose material included, by adding further components to the cellulose material, and by selecting a production process that promotes modification of specific properties, both physical and chemical.

Important properties of cellulose components, making up a final paper product, are the mechanical performance of the paper product like tensile strength, stiffness, z-strength, as well as density and optical properties. In production of paper products, the problem related to mechanical properties of the product is presently mainly solved in a more mechanical manner, by layering and arranging materials having different important properties. Problems related to poor optical properties are, for example, solved by addition of pigments and fillers.

However, there have also been some attempts to solve the problem of mechanical properties in a rather chemical manner. As an example, a PCT patent application with application number PCT/EP2011/065826 discloses modified cellulose fibres comprising cationised cellulose nanocrystals adsorbed thereon suitable to be used in paper products wherein the mechanical performance is important. The same application also discloses a process for producing paper comprising modified cellulose fibres as defined above.

The paper industry is an industry that is producing many million of tonnes of paper every year. There is a need to find ways to improve important properties, such as the mechanical performance of cellulose components making up final paper products. The ways of improvement should preferably be suitable for an industry producing paper products in very large quantities.

### Summary of the invention

The present invention is directed to a cellulose based product, a method for its production and products comprising the cellulose-based product.

In one embodiment of the invention a cellulose based product comprising a) pulp stock comprising cellulose fibres, b) one or more retention agents, and c) cellulose nanocrystals (CNC) is provided wherein cellulose nanocrystals are adsorbed on the cellulose fibres.

The cellulose based product shows improved mechanical performance, like improved tensile strength, E-modulus, bending stiffness, and z-strength, improved optical properties, like light scattering, and improved retention of fine particles such as cellulose fibres and additives in form of small particles.

The cellulose nanocrystals included in the cellulose based product work as an anionic part of nanoparticle retention system comprising the retention agent(s) and CNC. The advantages of the introduction of nanoparticles in a retention system include improved retention, more efficient dewatering and better formation.

The advantage of CNC per se is the substantially 100 % crystallinity which implies easier preparation of the CNC and less growth and swelling during production of the same compared to, for example, fibrillar nanocellulose, which in turn implies easier dewatering and drying.

Another embodiment illustrated by the invention is a method for preparation of a cellulose-based product comprising the steps of:
a) supplying a pulp stock comprising cellulose fibres,
b) adding one or more retention agents to said pulp stock,
c) adding cellulose nanocrystals (CNC) to said pulp stock, and
d) mixing.

The cellulose based product as described above is obtainable by the method for preparation as defined above.

There are several advantages achieved by the method as described above. The invention provides a simple process in traditional large scale paper and paperboard production industry. As an example, there are no extra process steps required for paper and paperboard production compared to the conventional methods.

The production of a cellulose based product may be improved with a nanoparticle such as CNC in the retention system. Also the separation of the cellulose based product from a dispersion medium may be improved.

Another embodiment is illustrated wherein the method for preparation of a cellulose-based product further comprises a step of:
e) separation of the cellulose based product from a dispersion medium.
The separation of the cellulose based product is preferably performed by dewatering, which then may be combined or followed by another steps of separation, such as drying.

In another embodiment also a method comprising a step of:
f) adding one or more additives to the pulp stock, is provided.
Examples of additives to be added in step f) are filler(s); wet strength agent(s); sizing agent(s); pigment(s) and anionic trash collector(s).

Another embodiment of the invention is a product, such as a paper product, comprising the cellulose based product as defined above.

### Brief description of the figures:

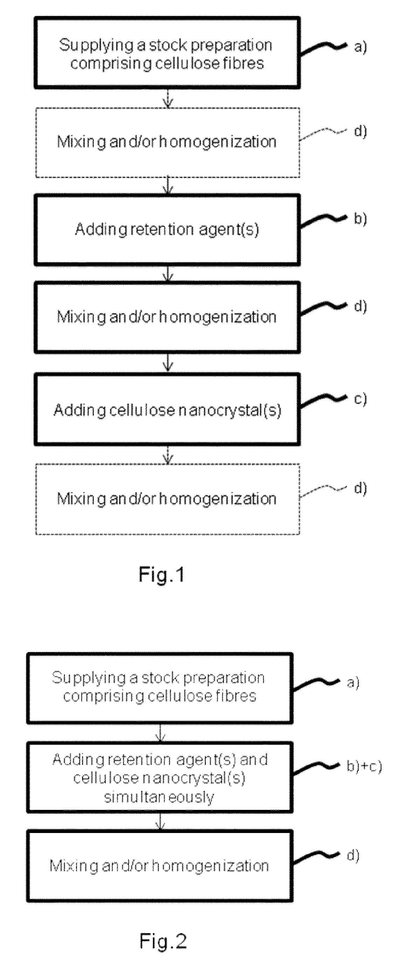

Figures 1-3 illustrate in flowsheets the method for producing the cellulose based product.

### Detailed description of embodiments of the invention

An object of the invention is to provide a cellulose based product comprising pulp stock comprising cellulose fibres, cellulose nanocrystals and one or more retention agents.

In one embodiment of the invention a cellulose based product comprising a) pulp stock comprising cellulose fibres, b) one or more retention agents, and c) anionic cellulose nanocrystals (CNC) is provided wherein cellulose nanocrystals are adsorbed on the cellulose fibres.

The cellulose pulp in the pulp stock as starting material may be obtained by suitable treatment of softwood or hardwood. Softwood is for example, spruce fir, pine tree and larch. Hardwood is, for example, birch, beech, ash, aspen, and eucalyptus.

The cellulose pulp in the pulp stock as starting material may also be selected from recycled paper products, for example recycled paper pulp formed from mill broke, pre-consumer waste and post-consumer waste or mixed office waste. Other sources of cellulose pulp are annual plants like rice, bamboo, cotton and bagasse.

The starting material might be a mixture of different cellulose pulps in the pulp stock.

The cellulose pulp in the pulp stock as starting material can be selected from bleached or unbleached cellulose pulps. The cellulose pulps can be obtained by pulping according to, for example, but not limiting to, the sulphite method, the soda method, or the sulphate method. Further, bleaching of the cellulose pulp can be performed either by a chlorinated process or by a non-chlorinated process. For example, these processes can be classified as totally chlorine free (TCF), or elementary chlorine free (ECF). The cellulose pulp as starting material can be selected from pulps having been dried, or never dried, during the processing.

In nature, also other constituents are included in the matter commonly called "cellulose". The amount of cellulose and cellulose fibres differentiate depending on the wood and plant species and their sources. For example, in wood, the cellulose fibres comprise three main constituents, these are cellulose, hemicelluloses and lignin. The hemicelluloses are the main source of anionic charges of the cellulose fibre if no other modifications are made.

Also the structure of hemicelluloses varies with the source of the cellulose fibre and by that the amount of anionic charges. In softwood the main hemicelluloses are glucomannans and xylanes while in hardwood the main hemicelluloses are xylanes. Also the amount of hemicelluloses in the cellulose fibres may vary depending on the source of the wood and plant. The hemicellulose may be, in general, about one third of the total amount of the cellulose fibres. Lignin is also an integral component of the cellulose fibre structure with origin from wood. However, in production of chemical paper grade pulp the aim is to reduce the amount lignin and to obtain free cellulose fibres.

The cellulose fibres are anionic charged by nature, mainly depending on the presence of the hemicelluloses. Depending on the origin of the cellulose fibre the content and the structure of the hemicelluloses may differ, and consequently also the amount of anionic charges of the cellulose fibre. The cellulose fibres in plants comprise also components like hemicellulose and lignin. Also amongst the plants, the portion of hemicelluloses and lignin depend on the source of the plant. In some plants the cellulose fibre may comprise almost pure cellulose.

Consequently, a prerequisite for electrostatic interactions is the presence of (anionic) charges on the cellulose fibre. The amount of charges varies with the source of the cellulose fibre.

Therefore, depending on the starting material for the present invention, the cellulose fibres may be pretreated in selected, commonly known, ways to obtain the charge, preferably anionic. Therefore, the origin of the cellulose fibres is an important aspect to consider because the amount of anionic charges differs between the plants. Also the method used for the treatment of the cellulose fibre, for example it is known that the sulphite method generates more anionic charges than the sulphate method.

There are also methods known to modify the numbers of anionic charges of the cellulose fibre(s). The amount of anionic charges can be modified by different other means, like methods for bleaching, pulping process and/or chemical modification, and therein, by selecting additives and process parameters etc. as well as the treatment which has been performed.

For the present invention the composition regarding the amount of cellulose and hemicelluloses are important, as these components, mainly the hemicelluloses, determine the amount of retention agent(s) to be adsorbed, and by that the improved properties of the final paper product achieved.

The charges of the cellulose fibres may allow a stiff and strong fibre network to be created when the cellulose nanocrystals are adsorbed on the cellulose fibres with the aid of retention agent(s).

The cellulose based product comprising the CNC may be included in different papermaking processes, thus in a process for producing paper product, such as paper, board, laminated paper, coated paper, membrane, filter, etc.

By the term 'cellulose fibre' it is herein meant any fibre like cellulosic material. The cellulose may be in mixture with hemicelluloses as the integral part of the fibre. The cellulose fibre may also comprise minor amounts of remaining residues from the plant, like lignin, pectin and minerals. Depending on the origin, the pulp stock comprising cellulose pulp may comprise only cellulose, thus no hemicelluloses is present. In these processes anionic charges of the cellulose fibres are created, with differentiated yields depending on the method used. Thus, the cellulose fibres may comprise between about 70 % to 100 % by weight cellulose, for example 70, 75, 80, 85, 90, 95 and 100 % by weight.

By the term "cellulose based product", it is herein meant the product comprising the pulp stock comprising cellulose fibres, cellulose nanocrystals, and one or more retention agents.

By the term "pulp stock", it is herein meant a composition comprising disintegrated pulp. Additionally, additives commonly used in the paper industry may be added to the pulp stock. Stock preparation involves a series of operations by which pulp properties are tailored to fit the product produced. It involves disintegration of pulp, refining, mechanical and chemical treatments.

The starting material for producing the cellulose based product is a dispersion of cellulose, may also be named pulp stock, including any kind of cellulose fibre(s). The pulp stock may be obtained by treatment of softwood or hardwood by different methods, for example by the sulphate method, the sulphite method, the soda process, or mechanical treatments, for example TMP (thermomechanical pulp) or CTMP (chemithermomechanical pulp). The pulp stock preferably comprises cellulose pulp. The cellulose pulp may be bleached or unbleached. The list of methods is not exhaustive.

The cellulose pulp in the pulp stock may be native, thus without further modifications. It can also be modified by different suitable substitutions to form, for example, different cellulose esters and cellulose ethers. Examples of modified cellulose are methylcellulose, carboxymethylcellulose, cellulose acetate, hydroxypropylmethylcellulose, hydroxypropylethylcellulose.

The cellulose pulp in the pulp stock may also be further treated before included in the present cellulose based product. The cellulose pulp may be treated by chemical treatment, mechanical treatment (eg. refining), or by a combination of chemical and mechanical treatment.

### The cellulose nanocrystals, the CNCs.

Cellulose nanocrystals are often denoted with the abbreviation 'CNC', and are also named cellulose whiskers and cellulose nanorods. They are also denoted with the abbreviation 'NCC', nanocrystalline cellulose.

By the term 'anionic cellulose nanocrystal' it is herein meant cellulose nanocrystal having the original charge of anionic charges or where the cellulose nanocrystal has been treated to change, preferably to increase, the amount of anionic charges, for example through a chemical procedure or modification.

There are different methods available for preparing the cellulose nanocrystals. For example, the cellulose nanocrystals may be produced by controlled acid hydrolysis of the cellulose, preferably by hydrolysis with sulphuric acid (H₂SO₄).

According to the present invention, cellulose nanocrystals are adsorbed onto the cellulose fibres together with retention agent(s). Cellulose nanocrystals (CNC) as well as ways to use them in polymer products are previously known. For example, from Xiaodong Cao et al., Biomacromolecules 2007, 8, 899-904 describes how to use cellulose nanocrystals in order to reinforce a polymer matrix of polycaprolactone-based waterborne polyurethane (WPU).

Further, cellulose nanocrystals may be produced by exposing a cellulose pulp in controlled acid hydrolysis and particles having rod like shapes, are obtained. This is described in M Hasani et al, Soft Matter, 2008, 4, 2238-2244.

Cellulose nanocrystals having such a three dimensional structure have been found to show advantageous properties, such as reinforcing properties, improvement of the mechanical properties, density of the product as well as the opacity of a paper product comprising the cellulose based product. Both the cellulose fibres as well as the cellulose nanocrystals are most commonly anionic, in different levels depending on the pulp stock, the treatment of the pulp etc. A retention agent having opposite charge may then create the adsorption of CNC to the anionic cellulose fibres.

The reinforcing performance may be affected by the three dimensional shape of the particles adsorbed upon the cellulose fibre.

Hydrolysis to create the cellulose nanocrystals are preferably performed on native cellulose. Native cellulose has a crystalline structure which is a prerequisite for forming the nanocrystals. The structure of native cellulose is also commonly called Cellulose I. The source of native cellulose may be softwood cellulose, hardwood cellulose, annual plants like cotton, flax, jute, bacterial cellulose and tunicate are all suitable for forming the cellulose nanocrystals.

When the cellulose fibres originate from wood the process for producing the starting material for the present invention may include a step of delignification. Presence of lignin in higher amounts prohibits the formation of the nanocrystals. Therefore it is important, dependant on the source of cellulose for producing the cellulose nanocrystals, to reduce the amount of lignin present and keep the amount of lignin to lower amounts. To form the starting wood fibre (containing lignin), it must most often be treated in a process to reduce the content of lignin. For example, in a process for forming the nanocrystals, the cellulose fibres may be treated by the so called sulphate process, sulphite process or a soda process. Another option is by cellulose thermomechanical preparation (CTMP). These processes are all well-known within the field. During these processes the different components, such as cellulose, hemicelluloses and lignin are separated from each other and the amount of lignin may be reduced. During these processes also the cellulose fibres are released and the charges on the surface of the cellulose fibre and within the cellulose fibre are made available for interfibrillar bondings. When manufacturing the cellulose nanocrystals by controlled hydrolysis cellulose, thus treatment with strong acids, nanocrystals having a suitable rod-like shape are obtained.

The cellulose nanocrystals may be prepared by a method wherein the starting material is treated by acid hydrolysis, thus treatment with strong acids. This controlled acid hydrolysis may be performed with strong acids like, for example, sulfuric acid (H₂SO₄), phosphoric acid (H₃PO₄), hydrobromic acid (HBr) or hydrochloric acid (HCl). The concentration of the acid used may be between 50 to 90 % (w/w), or for example between 55 to 70 % (w/w), for example between 60 to 65 % (w/w), such as 60, 61, 62, 63, 64 and 65 % (w/w). The reaction is preferably performed at a temperature between about 40 °C to about 75° C, for example at about 40, 45 °C, 50 °C, 55 °C, 60 °C, 65 °C, 70 °C, 72, or 75 °C. The time for reaction may vary widely, may be performed during from 20 minutes up to 5-6 hours.

The rods may have a size of, in average, from 1 to 60 nm in width, and length of 50 to 5000 nm. For example, the rods may have a size of, in average, from 1 to 15 nm in width, and a length of, in average, from 50 to 1000 nm. For example, the size of the rods is about 1 to about 15 nm in width in average, and a length of about 50 to 500 nm, or of about 1 to 5 nm in width and of a length of about 100 to 200 nm.

The cellulose nanocrystals obtained by the controlled acid hydrolysis of the cellulose are highly crystalline. Preferably, the cellulose nanocrystals show a crystallinity of substantially 100 %. The crystallinity may be measured with known methods like X-ray measurements. Examples are wide angle X-ray scattering, WAXS, small angle X-ray scattering, SAXS. The crystalline structure parts of the cellulose nanocrystals may be mixed with parts of amorphous, or partly amorphous structure.

The cellulose crystal structures of the cellulose nanocrystals have a substantial portion of ionic and ionizable groups and are therefore interesting structures to apply on cellulose pulp fibres in order to improve properties like fiber stiffness, etc.

The cellulose based product may comprise CNC (as component c)) in a concentration of in the range of from 0.01 % to 10 % per dry weight of cellulose fibres, preferably in the range of from 0.01 % to 5 % per dry weight of cellulose fibres. Examples of concentrations are 0.01, 0.05, 0.1, 0.2, 0.3, 0.4, 0.5, 0.6, 0.7, 0.8, 0.9, 1, 1.5, 2, 2.25, 2.5, 2.75, 3, 3.25, 3.5, 3.75, 4, 4.25, 4.5, 4.75, 5, 5.5, 6, 6.5, 7, 7.5, 8, 8.5, 9, 9.5 and 10 % per dry weight of cellulose fibres.

### The 'retention agent'

By the term 'retention agent', it is herein meant chemicals having the property to agglomerate and flocculate cellulose fibres and various additives. The retention agent suitable for the cellulose based product may also be acting as a polyelectrolyte suitable for pulp industry, paper production etc. The retention agents may be selected from polymers or salts, or complex thereof, which comprise a large number of charged groups.

The retention agents may be selected from any kind of water-soluble and charged compound having a structure allowing it to be adsorbed on cellulose fibres as well as to adsorb CNC and fines (such as fine material, pigments, colloidal particles) to itself. The size definition of fines depends on the process equipment, for example the holes of the wire which is used for dewatering of the cellulose-based product.

Examples of water-soluble polymers are typically selected from water-soluble cationic polymers such as cationic polyacrylamide (C-PAM), polydiallyldimethylammonium chloride (polyDADMAC), polyamine, polyethyleneimine (PEI), PAMAM-EPI, polyethyleneoxide (PEO). The list is not exhaustive.

The cellulose-based product may comprise the water-soluble cationic polymer in a concentration in the range of from 0.01 to 3 % per dry weight cellulose fibres; preferably in a concention in a range of from 0.01 to 2 % per dry weight cellulose fibres. For example, when the water-soluble cationic polymer is cationic polyacrylamide (C-PAM) the range is from 0.01 to 0.5 % per dry weight cellulose fibres.

Examples of polysaccharides that may be used as retention agents are typically starch, chitosan. The list is not exhaustive.

The cellulose-based product may comprise polysaccharides in a concentration in the range of from 0.01 to 3 % per dry weight cellulose. When starch is used as the retention agent the concentration is in the range of from 1 to 1.5 % per dry weight cellulose. When chitosan is used as the retention agent the concentration is about 0.5 % per dry weight cellulose. Examples of concentrations are 0.1, 0.2, 0.3, 0.4, 0.5, 0.6, 0.7, 0.8, 0.9 and 1.0 % per dry weight cellulose.

Example of suitable salts as retention chemicals are alum (for example Al₂(SO₄)₃ x 14H₂O), polyaluminium chloride (PAC). The list is not exhaustive

The salt may be present in a concentration in the range of from 0.1 to 1.0 % per dry weight cellulose fibres; preferably in a concentration of about 0.3 % per dry weight cellulose fibres.

Another type of retention agent is cellulose nanocrystals which have been cationised, forming 'cationised cellulose nanocrystals' or 'cationic cellulose nanocrystals'.

By the term 'cationised cellulose nanocrystal', it is herein meant cellulose nanocrystal having been cationised through a chemical procedure or modification. One way of creating the cationisation is with a cationisation agent.

The amount of charged groups of a cationic polymer, i.e. charge density [meq/g], is measured by polyelectrolyte titration using an anionic polymer with a known charge density. As an example, the degree of substitution (DS) of C-PAM is 0.1 to 0.5, while the DS of starch is 0.01-0.07.

The retention agent(s) suitable for the cellulose based product as illustrated herein may be selected from those as have a viscosity of 1000 to 30000 mPa*s. Preferably, a retention agent has a viscosity of 5000 to 20000 mPa*s. Typically, the viscosity is about 7500 mPa*s, about 10000 mPa*s, about 15000 mPa*s, about 20000 mPa*s.

### The cellulose dispersion

An aspect of the present invention is a cellulose dispersion comprising the cellulose based product comprising the cellulose nanocrystals (CNC). The cellulose dispersion is a result of step a) to d) of the method for preparation of a cellulose-based product.

The cellulose dispersion of the invention is produced by mixing the cellulose fibres present in the pulp stock, the cellulose nanocrystals and retention agent(s) together.

The method for production of the cellulose based product results in that cellulose nanocrystals are attached onto the cellulose fibres in the pulp stock by the retention agent(s). The method is suitably performed during mixing, which can be performed by stirring, sonication or other suitable procedures or processes. For example, the mixing of pulp stock and retention agent may be performed by stirring. The mixing depends largely on the apparatus but it takes preferably place at a mixing pump, refiner or by mechanical stirrer in a vessel. The list of apparatuses is not exhaustive.

The starting material, i.e. the pulp stock, forming the cellulose dispersion may originate from softwood pulp and hardwood pulp. The cellulose may be a so called 'sulphate pulp', a pulp which has been treated in alkali. The pulp stock comprises the cellulose fibres to be adsorbed with the cellulose nanocrystals in a dispersion medium. The pulp stock comprises the cellulose fibres in about 0.05 to about 20 % by weight, for example in an amount of between in about 0.05 to about 15 % by weight, or about 0.10 to 15 % by weight; or about 0.10 to about 10 % by weight. Other examples of concentration of the cellulose fibres are: about 1, 2, 3, 4, 5, 6, 7, 8, 9, 10, 11, 12, 13, 14 or about 15 % by weight.

The cellulose fibres in the pulp stock are dispersed in a dispersion medium. The dispersion medium may be selected from water, water miscible solvents and mixtures thereof. Examples of water miscible solvents are lower alcohols like methanol, ethanol, isopropanol, acetone, or ethylacetate. The list of water miscible solvents is not exhaustive. Another examples of dispersion medium are deionized water and process water.

The dispersion medium may be a mixture of water and the water miscible, and comprises for example the water and the water miscible solvent in the following ratios: 50:50; 60:40; 70:30; 80:20; 90:10; 91:9; 92:8, 93:7, 94:6, 95:5, 96:4, 97:3, 98:2, 99:1.

The anionic charges of the cellulose fibres in the pulp stock may be measured before the preparation of the cellulose based product, for example as surface charges or of the total amount of charges of the cellulose fibre.

The surface charges may be followed and determined, optionally, together with the Z-potential during the production of the product. By suitable selection of these parameters the production may be optimized. The optimization is dependent on the components included in the process as well as the apparatuses used for the production. However, common for the processes are that the components in the cellulose based product, and the level of charged groups shall be selected in a way that the retention of additive(s) and fines is kept at reasonable levels to optimal levels.

To optimize the process to produce the cellulose based product, or the cellulose dispersion comprising the cellulose based product, it may be important to determine the amount of anionic charges of the cellulose fibre in the cellulose pulp and pulp stock being the starting material.

Further, the cellulose dispersion according to present invention comprises the cellulose nanocrystals attached with one or more retention agents selected from C-PAM, polyDADMAC, starch, alum, and chitosan, on the cellulose fibres.

The cellulose fibres have anionic charges on its surface, the more anionic charges on the surface of the fibres, the more CNC can be attached on the surface of the cellulose fibre. Optionally, additional charges can be introduced on the surface by careful selection of process for manufacturing.

The changes of anionic charges can be followed by measuring the Z-potential.

Further, also additives may be included in the cellulose based product. Additives may be selected from fillers, wet strength agents, sizing agents, pigments and anionic trash collectors. As an example, fillers may be added to improve optical and printing properties (e.g. opacity and printability) of products like for example paper and board. Typically, such fillers may be one or more selected from chlorides, carbonates and sulphates of sodium, calcium and aluminium. An example is calcium carbonate (CaCO₃). Also, fillers like clay are suitable to be added in the cellulose based product.

However, when using the cellulose nanocrystals together with pulp stock comprising cellulose fibre(s) and one or more retention agents according to the invention, a cellulose based product showing improved retention of cellulose fibres and additives, such as fillers, colloidal particles, pigments and fine materials, in the paper producing process is obtained.

### Method for producing a cellulose based product and a cellulose dispersion comprising the cellulose based product.

In one embodiment the method for producing the cellulose base product comprising the steps of:
a) supplying a pulp stock comprising cellulose fibres,
b) adding one or more retention agents to the pulp stock,
c) adding crystalline nanocellulose (CNC) to the pulp stock,
d) mixing and/or homogenization of the composition of pulp stock, retention chemical and CNC.

In step a), a pulp stock comprising a (cellulose) pulp which in turn comprises cellulose fibres is supplied. The pulp stock may comprise any kind of pulp that comprises cellulose fibres. The pulp stock may also comprise other components like additives in addition to cellulose fibres.

The pulp stock may be a dispersion of cellulose fibres in water, with a dry solid content of cellulose fibres in the range of from 0.1 % to 10 %, preferably in the range of from 0.1 % to 5 %, more preferably in the range of from 0.1 % to 1 %, based on the total weight of the dispersion. The cellulose fibres might be a mixture of different cellulose pulps.

The dispersion may be obtained by suspending dry pulp (having a dry solid content of cellulose fibres in the range of from 75 to 95 %, based on the total weight of the dry pulp) in a dispersion medium.

The pulp stock may also be directly obtained from a pulp-producing machine, or in a paper-machine.

In step a), a pulp stock may be a result of one or more pre-steps such as dispersion of dry pulp in a dispersion medium and/or refining of pulp per se and/or refining of pulp stock. The refining of the pulp stock improves the strength of the cellulose based product to be produced.

The dispersion of cellulose fibres allows the adsorption of retention agent(s) and CNC on the cellulose fibres. The pulp stock supplied in step a) may after any optional pre-step(s) have a concentration of from 0.1 % to 10% per dry weight cellulose fibres, preferably from 0.1 to 5 % per dry weight cellulose fibres, more preferably from 0.1 % to 1 % per dry weight cellulose fibres.

In step b), one or more retention agents are added to the pulp stock. The retention agents may be added in powder form. The retention agents may also be added in suspension. The retention agents are preferably added to the pulp stock comprising cellulose fibres, for example, via pipes, via a pump or directly into a stirred tank.

In step (c), the CNC is added to the pulp stock. The CNC may be added in powder form. Alternatively, the CNC may be added in solution. The CNC is added to the pulp stock comprising cellulose fibres, for example, via pipes, via a pump or directly into a stirred tank.

Step (d), the mixing and/or homogenization of the composition of pulp stock, retention agent(s) and CNC aim to achieve a cellulose-based product or a cellulose dispersion comprising the cellulose-based product that is substantially homogenized in regard to the components: cellulose fibres, retention agent(s) and CNC. The mixing is preferably performed in order to homogenize the mixture of pulp stock, retention agent(s) and CNC, and does not necessarily imply any reaction to take place. The mixing and/or homogenization is important in order to obtain a cellulose based product with uniform adsorption of CNC on the cellulose fibres.

In one embodiment a method for preparation of a cellulose-based product is provided, wherein cellulose nanocrystals (CNC) are present in an average concentration in the range of from 0.01 % to 10 % per dry weight cellulose fibres; preferably in the range of 0.01 % to 5 % per dry weight of cellulose fibres in the cellulose-based productproduced in the steps a) to d); and, the retention agent(s) is present in an average concentration in the range of from 0.01 % to 3 % per dry weight cellulose fibres in the cellulose-based product produced in the steps a) to d).The mixing and/or homogenization is preferably a low-intensity mixing. The mixing and/or homogenization may be performed by use of any of the following equipments: crushers, refiners, mills, static mixers, stirred tanks with any of the following stirrers: flat-bladed turbines, propellers, pitched-bladed turbines, paddle, anchor, helical ribbon agitators; pumps, compressors.

Further, the conductivity of the cellulose-based product and/or the cellulose dispersion prepared by step a) to d) is at least 0.01 mS/cm, preferably in the range of from 0.5 to 10 mS/cm.

The method for preparation of cellulose based product is further illustrated in following embodiments.

In Fig. 1, an embodiment of the method for preparation of a cellulose-based product is shown by a flowchart. The continuous lines imply an essential step, while the dotted lines imply an optional step. In this embodiment, a pulp stock comprising cellulose fibres is firstly supplied. The pulp stock may be supplied directly to the paper machine or in a pre-step in the paper production process. The supplying position may vary. If the pulp stock is supplied directly to the paper machine, the dry weight of cellulose fibres is typically in the range of from 0.1 % to 2 %. If the pulp stock is supplied in a pre-step of the paper production process, the dry weight of cellulose fibres is typically in the range of from 2 % to 5 %. A retention agent may thereafter be added to the supplied pulp stock. The retention agent may be a single retention agent or any number of retention agents. The addition of retention agent(s) is followed by mixing and/or homogenization. The mixing and/or homogenization enhance electrostatic forces, cohesive forces and van der Waals forces to arise between the cellulose fibers and the retention agent(s). As an example, anionic cellulose fibres and cationic retention agent(s) may attract each other, and this attraction may be enhanced by mixing and/or homogenization. The mixing and/or homogenization may be performed by any mixing equipment mentioned above.

The addition of CNC, may take place sequentially after the mixing of the pulp stock and the retention agent(s). This is shown in Fig.1. The addition may also take place simultaneously as the mixing or simultaneously as the addition of the retention agent(s). This is shown in Fig 2.

In general, the components of the cellulose-based products, i.e. the stock, the retention agent(s) and CNC can be added simultaneously or sequentially. The mixing and/or homogenization may be performed after the addition of each component or after the addition of all components. Typically, mixing and/or homogenization are performed when retention agent(s) has been added.

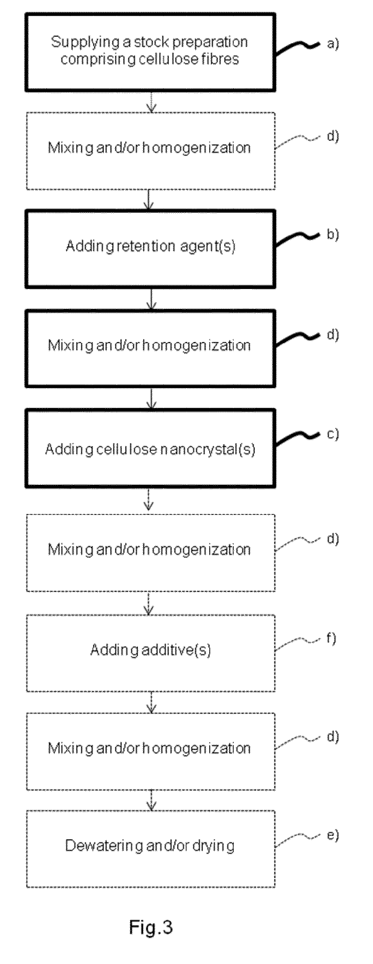

The method may also optionally comprise step e) and/or f) as in Fig. 3, showing an embodiment comprising both step e) and step f). Step e) may be dewatering and/or drying, wherein the cellulose-based product is separated from the dispersion medium, e.g. water. In step e), the separation may be performed by dewatering, drying, filtering, pressing the cellulose dispersion. The drying may be performed by, for example, flash drying. The cellulose-based product obtained in step a) to step d) may then be included in a process for producing a paper product comprising the cellulose-based product.

The method may also comprise a step f) of adding additive(s) to the pulp stock. The additive(s) may be added in powder form. The additive(s) may also be added in solution. The additive(s) is preferably added to the pulp stock comprising cellulose fibers via pipes or directly into a stirred tank. In an embodiment, the additive(s) form part of the supplied pulp stock. The addition of additive(s) may optionally be followed by mixing and/or homogenization.

Fig. 3 illustrates the method for preparation of the cellulose based product further comprising step e) and step f). Also these steps may be performed in simultaneously or sequentially order.

Optionally, a step comprising refining of the cellulose fibres may be included in the method of preparation. The method may comprise one step of refining or multiple step of refining.

In the method for preparation of a cellulose-based product according to the steps a) to d) these steps are taking place at a pH in the range of from 3 to 9. In general, when the pulp stock is produced according to sulphite method is taking place at pH of 4-7, when it is produced according to sulphate method is taking place at 7-8. Another example, when high content of CaCO₃ the pH is 8-8.5.

In one embodiment also cationised cellulose nanocrystal may be included in the cellulose-based product. This is described in M Hasani et al, Soft Matter, 2008, 4, 2238-2244. This article further describes methods for cationisation of cellulose nanocrystals by etherification agents. The cationisation of the cellulose nanocrystals can be quantified by different known methods, for example by titration of counter-ions, for example with silver nitrate (AgNO₃), or by elementary analysis. The degree of substitution, thus the amount of cationic charges, determines the amount of cationised cellulose nanocrystals to be added to the cellulose fibres.

The cationised cellulose nanocrystals may have a degree of substitution (DS) of between about 0.01 to about 0.2, for example between about 0.05 to about 0.2.

By the term 'degree of substitution' (DS) it is herein meant the average number of cationic groups per glucose monomer included in the cellulose chain. The degree of substitution of the cellulose nanocrystal is preferably lower than 0.5. If higher degree of substitution, the cellulose nanocrystals tends to be soluble in a water solution.

The level of cationisation or degree of substitution in certain conditions may be followed by methods like Z-potential, conductrometric titration, and elementary analysis.

The cellulose dispersion comprises cellulose fibres with cationised cellulose nanocrystals adsorbed thereon. The cellulose dispersion may comprise about 1 to 50 mg adsorbed cationised cellulose nanocrystals per g pulp. For example the cellulose dispersion comprises about 10 to 50 mg adsorbed cationised cellulose nanocrystals per g pulp, like about 10, 15, 20, 25, 30, 35, 40, 45, or about 50 mg adsorbed cationised cellulose nanocrystals per g pulp.

The cellulose based product according to the invention may preferably comprise 1 - 50 mg adsorbed cellulose nanocrystals, preferably cationised cellulose nanocrystals, per g cellulose pulp, for example, 1-40 mg /g cellulose pulp; 1-35 mg /g cellulose pulp; and 5-35 mg/g cellulose pulp.

The cellulose based product may contain the cellulose nanocrystal in a concentration of about 1 to 5 % by weight of cationised cellulose nanocrystals. For example the cellulose based product may comprise about 2 to 5 % by weight of cationised cellulose nanocrystals; or about 3 to 4 % by weight of cationised cellulose nanocrystals; or about 2.5 to 3.5 % by weight of cationised cellulose nanocrystals. Examples are 2.5, 2.75, 3, 3.25, 3.5, 3.75, 4, 4.25, 4.5, 4.75, 5 % by weight of cationised cellulose nanocrystals.

The cellulose dispersion comprising the cellulose based product may be included in a papermaking process, thus in a process for producing paper products, such as paper, board, laminated paper products, coated paper products, membrane, filter, etc.

Another embodiment of the invention is a paper product comprising the cellulose based product as defined above. The paper product may be in form of paper, board, laminated paper product, coated paper product, membrane, filter, etc.

The following examples indicate methods for producing the cellulose based product. The examples are only illustrative, and are not construed as limiting the present invention to any particular compounds, processes, or conditions.

### Examples

### Example 1: Filtration of pulp

A sample of pulp comprising cellulose fibres (Södra Green 85Z, produced at Södra Cell Mönsterås) was filtrated in a bag of polyester with a mesh of a size of 100 µm by addition of deionized water to the sample. The filtration was terminated when the amount of fine particles in the pulp stock was reduced to 1,5 % of the total pulp stock. The obtained pulp stock with 1,5 % fine particles was thereafter diluted with deionized water until it reached a concentration of 2 g pulp per L water. The pH of the cellulose pulp dispersion was adjusted by addition of natrium hydroxide (NaOH) until pH 8 was reached.

### Example 2: Preparation of cellulose nanocrystals (CNC)

Cellulose nanocrystals (CNC) were prepared under laboratory conditions by controlled acid hydrolysis of cellulose by sulphuric acid (H₂SO₄). A dispersion of cellulose nanocrystals (CNC) was prepared by mixing 40 g of dried pulp, approximatively fibre length of 2.0 mm, with 700 mL of acid (64% w/w sulfuric acid (Sigma)) at 45°C and then constant stirring for 45 minutes. After 45 min the dispersion was diluted 1 0-fold with purified water to quench the reaction. The dispersion was centrifuged at 6000 rpm (revolutions per minute) for 10 minutes to concentrate the cellulose and to remove excess water and acid. The precipitate was rinsed, re-centrifuged and dialyzed against purified water for 10 days until constant neutral pH was achieved in the effluent. The dispersion was sonicated (Vibracell Sonicator) while cooling in an ice bath to create cellulose crystals of colloidal dimensions (such as 1 to 1000 nm).A dispersion of rodlike CNC was produced and the use of sulphuric acid made the CNC highly negatively charged, i.e. anionic.

### Example 3: Preparation of retention agents

All retention agents: C-PAM, alum, chitosan (shown in Table 1), included in the trial were initially in powder form and cationic. Solutions of retention agents were prepared by addition of deionized water one day before the retention trials in order to assure the solutions to be fresh. The concentration of C-PAM was 0.1 g/L, and the concentration of alum and chitosan, respectively, was 1 g/L. The pH of the chitosan solution was adjusted to acidic pH, more specifically to pH 3.2, by addition of hydrochloric acid (HCl) in order to enable the chitosan to dissolve easier in deionized water.

**TABLE 1. Characteristics of the retention agents used in the retention trials.**

| **Retention chemical** | **Chemical formula** | **Selling company** | **Product name** | **Characterizing parameter** |
|---|---|---|---|---|
| C-PAM | (C₃H₃N8O₂)n | Hercules | Perform 422 | DS 0.1 |
| Alum | Al₂(SO₄)₂ 14H₂O | Kemira | ALG | 55 %, 342 g/mol |
| Chitosan | (C₁₂H₂₄N₂O₉)ₙ | Sigma Aldrich | Chitosan low MW | 20000 cps |
| Cationic starch | | SOLAM | Solbond C65 | DS 0.065 |

### Example 4a: Retention trials with C-PAM

The retention trials were performed in a Britt Dynamic Drainage Jar (BDDJ) of the brand Paper Research Materials Inc. Firstly, 500 mL of 0.2 % fibre was added to the BDDJ. After 60 seconds of mixing at 750 rpm, a cationic retention chemical was added: 3 mL of C-PAM in solution with a concentration of 0,1 mg C-PAM/mL dispersion. After another 30 seconds of mixing at 750 rpm, anionic CNC was added: 30 mL of CNC in dispersion with a concentration of 1 mg CNC/mL solution and 50 mL of CNC in dispersion with a concentration of 1 mg CNC/mL dispersion, respectively. After another 10 seconds of mixing at 750 rpm, the resulting dispersion was drained through a metallic screen with holes of a size of 75 µm before being analyzed with regard to total organic carbon (TOC).

### Example 4b: Retention trials with alum

The retention trials were performed in a Britt Dynamic Drainage Jar (BDDJ) of the brand Paper Research Materials Inc. Firstly, 500 mL of 0.2 % fibre dispersion was added to the BDDJ. After 60 seconds of mixing at 750 rpm, a cationic retention agent was added: 3 mL of alum in dispersion with a concentration of 1 mg alum/mL solution. After another 30 seconds of mixing at 750 rpm, anionic CNC was added: 30 mL of CNC in dispersion with a concentration of 1 mg CNC/mL dispersion and 50 mL of CNC in dispersion with a concentration of 1 mg CNC/mL solution, respectively. After another 10 seconds of mixing at 750 rpm, the resulting dispersion was drained through a metallic screen with holes of a size of 75 µm before being analyzed with regard to total organic carbon (TOC).

### Example 4c: Retention trials with chitosan

The retention trials were performed in a Britt Dynamic Drainage Jar (BDDJ) of the brand Paper Research Materials Inc. Firstly, 500 mL of 0.2 % fibre dispersion was added to the BDDJ. After 60 seconds of mixing at 750 rpm, a cationic retention chemical was added: 5 mL of chitosan in solution with a concentration of 1 mg chitosan/mL solution. After another 30 seconds of mixing at 750 rpm, anionic CNC was added: 30 mL of CNC in solution with a concentration of 1 mg CNC/mL solution and 50 mL of CNC in solution with a concentration of 1 mg CNC/mL solution, respectively. After another 10 seconds of mixing at 750 rpm, the resulting dispersion was drained through a metallic screen with a holes of a size of 75 µm before being analyzed with regard to total organic carbon (TOC).

### Example 4d: Retention trials with cationic starch

The retention trials were performed in a Britt Dynamic Drainage Jar (BDDJ) of the brand Paper Research Materials Inc. Firstly, 500 mL of 0,2 % fibre dispersion was added to the BDDJ. After 60 seconds of mixing at 750 rpm, a cationic retention chemical was added: 10 mL of starch in solution with a concentration of 1 mg starch/mL solution. After another 30 seconds of mixing at 750 rpm, anionic CNC was added: 30 mL of CNC in dispersion with a concentration of 1 mg CNC/mL dispersion and 50 mL of CNC in dispersion with a concentration of 1 mg CNC/ dispersion, respectively. After another 10 seconds of mixing at 750 rpm, the resulting dispersion was drained through a metallic screen with a holes of a size of 75 µm before being analyzed with regard to total organic carbon (TOC).

### Example 5: Total organic carbon (TOC) analysis

The total organic carbon (TOC) analysis was performed in a TOC-5050A of the brand SHIMADZU. The results of th TOC analysis are shown in Table 2. TOC presented in table are expressed as mg/l of filtrate.

**TABLE 2. The results of the TOC analysis.**

| | C-PAM | Alum | Chitosan | Ref. CNC |
|---|---|---|---|---|
| CNC 30 mL | 12.2 | 6.8 | 2 | 8.7 |
| CNC 50 mL | 13.3 | 11.9 | 1.6 | 8.6 |

Having now fully described this invention it will be appreciated by those skilled in the art that the same can be performed within a wide range of equivalent parameters. The variations to the disclosed embodiments can be understood and effected by those skilled in the art practising the claimed invention, from studying the disclosure and appended claims, and without departing from the gist and scope of the invention and without undue experimentation. This application is intended to cover any variations, uses, or adaptations of the invention following, in general, the principles of the invention and including such departures from the present disclusure as come within known or customary practice within the art to which the invention pertains and as may be applied to.

## Claims

1. A cellulose-based product comprising
a) pulp stock comprising cellulose fibres,
b) one or more retention agents, and
c) cellulose nanocrystals (CNC).

2. The cellulose-based product according to claim 1, wherein cellulose nanocrystals (CNC) are present in a concentration in the range of from 0.1 to 10 % per dry weight cellulose fibres; preferably the cellulose nanocrystals are present in the range of 0,1-5 per dry weight cellulose fibres; or more preferably in the range of 0.1-3 % by dry weight of cellulose fibres.

3. The cellulose-based product according to claim 1 or 2, wherein cellulose nanocrystals (CNC) have an average length in the range of from 50 to 5000 nm and an average width in the range of from 1 to 60 nm;
preferably an average length in the range of from 50 to 1000 nm and an average width in the range of from 1 to 15 nm;
more preferably an average length of about 50 to 500 nm and an average width of about 1 to about 15 nm;
or an average length of 100 to 200 nm and an average width of about 1 to 5 nm.

4. The cellulose-based product according to any of claims 1 to 3, wherein cellulose nanocrystals (CNC) show a crystallinity of substantially 100 %.

5. The cellulose-based product according to any of claims 1 to 4, wherein cellulose nanocrystals (CNC) are prepared by acid hydrolysis of cellulose, preferably by hydrolysis with sulphuric acid (H₂SO₄).

6. The cellulose-based product according to any of claims 1 to 5, wherein the retention agent is charged.

7. The cellulose-based product according to any of claims 1 to 6, wherein the retention agent is a water-soluble polymer.

8. The cellulose-based product according to any of claims 1 to 7, wherein the water-soluble polymer is present in a concentration in the range of from 0.01 to 3 % per dry weight cellulose fibres; preferably in a concentration in a range of from 0.01 to 2 % per dry weight cellulose fibres.

9. The cellulose-based product according to any of claims 1 to 6, wherein the retention agent is a salt.

10. The cellulose-based product according to any of claims 1 to 6, wherein the retention agent is cationic cellulose nanocrystals (CNC).

11. A method for preparation of a cellulose-based product comprising the steps of:
a) supplying a pulp stock comprising cellulose fibres,
b) adding one or more retention agents to said pulp stock,
c) adding cellulose nanocrystals (CNC) to said pulp stock, and
d) mixing.

12. The method for preparation of a cellulose-based product according to claim 11 further comprising the step of:
e) separation of cellulose based product from dispersion medium; preferably the separation comprises steps of dewatering.

13. The method for preparation of a cellulose-based product according to claim 11 or 12 further comprising the step of:
f) adding one or more additives to the pulp stock.

14. The method for preparation of a cellulose based product according to any of claim 11 to 13, wherein the conductivity of the cellulose-based product is at least 0,01 mS/cm; preferably in the range of 0.5 och 10 mS/cm.

15. The method for preparation of a cellulose-based product according to any of claims 11 to 14, wherein cellulose nanocrystals (CNC) are present in an average concentration in the range of from 0.01 % to 10 % per dry weight cellulose fibres; preferably in the range of 0.01 % to 5 % per dry weight of cellulose fibres in the cellulose-based product produced in the steps a) to d); and the retention agent(s) is present in an average concentration in the range of from 0.01 % to 3 % per dry weight cellulose fibres in the cellulose-based product produced in the steps a) to d).

16. Product comprising the cellulose-based product as defined by any of claims 1 to 10, wherein the product is a paper, a paper sheet, a board and a composite product.
